Europäisches Patentamt

European Patent Office

Office européen des brevets

(11) Numéro de publication: **0 365 373**
**A1**

## (12) DEMANDE DE BREVET EUROPEEN

(21) Numéro de dépôt: **89402468.6**

(51) Int. Cl.5: **F16H 1/44**

(22) Date de dépôt: **11.09.89**

(30) Priorité: **16.09.88 FR 8812300**

(43) Date de publication de la demande:
**25.04.90 Bulletin 90/17**

(84) Etats contractants désignés:
**AT BE CH DE ES GB GR IT LI LU NL SE**

(71) Demandeur: **Bossuet, Claude**
**10 rue de l'Aiglon**
**F-53000 Laval(FR)**

(72) Inventeur: **Bossuet, Claude**
**10 rue de l'Aiglon**
**F-53000 Laval(FR)**

(54) **Dispositif perfectionnant le différentiel autobloquant par freinage contrôlé des planétaires.**

(57) L'invention concerne un dispositif permettant à un différentiel de transmettre automatiquement des couples différents à chacun de ses arbres.

Il est constitué d'un différentiel classique aux planétaires duquel sont ajoutés un flasque à moyeu 27 ou 28 associé au planétaire par des billes agissant elles même sur les rondelles de réaction 25 ou 26. lorsque les couples entre planétaires 13 ou 18 et les flasques 27 ou 28 sont inégaux une des rondelles de réaction 25 ou 26 applique une pression sur les freins 16-12 ou 20-21 par l'intermédiaire des poussoirs 2 ou 14, freinant ainsi le planétaire tendant à s'emballer.

Le dispositif selon l'invention est particulièrement destiné aux véhicules automobiles, tracteurs agricoles, véhicules tous terrains etc.

Fig. 3

## Dispositif perfectionnant le différentiel autobloquant par freinage contrôlé des planétaires.

La présente invention concerne un dispositif de perfectionnement du différentiel, qui élimine son principal défaut (défini au paragraphe suivant) dans toutes ses applications notamment sur les véhicules automobiles tracteurs etc.

La différentiel classique à pignons planétaires et satellites permet de transmettre des couples moteurs égaux à chacun de ses deux arbres de sortie, tout en permettant à ceux-ci de tourner à des vitesses de rotation différentes. Grace à ce résultat le véhicule peut suivre les courbes de la route, sans ripage des roues motrices. En contre partie, le différentiel à le grave défaut de ne pouvoir transmettre qu'un faible couple moteur à la roue du véhicule adhérant parfaitement au sol, lorsque l'autre roue manque d'adhérence et tourne facilement, sans entrainer le véhicule.

Les dispositifs pour pallier cet inconvéniant sont nombreux. Le plus simple et sans doute le plus efficace, "le blocage de différentiel" (condamnation du différentiel par crabotage du planétaire sur le boîtier ou par crabotage des deux arbres entre eux) doit être commandé par le conducteur et son utilisation intempestive peut être désastreuse pour la transmission du véhicule et dangereuse pour sa conduite.

Très nombreux sont aussi les systèmes dans lesquels un frein agit automatiquement sur les éléments internes du différentiel pour en limiter son effet, certains pour des couples faibles par rapport à la puissance du véhicule, d'autres au contraire pour des couples élevés.

On peut citer les quelques brevets suivants:
0 066 449
1 155 889
1 311 946
1 540 993
1 596 579
3 364 791
8 013 994
2 229 294
2 256 350
2 296 131
2 358 794
2 380 158
2 380 159
2 706 052

Cette invention entend remédier aux inconvéniants des différentiels en proposant un perfectionnement par rapport aux systèmes connus et particulièrement au brevet américain 3 364 791 et au brevet français 2 547 883 déposé par le demandeur. Elle permet au différentiel de transmettre à l'un de ses arbres de sortie, la totalité du couple moteur reçu, lorsque dans le cas extrême, l'autre arbre n'offre aucun couple résistant. Par ailleurs ce dispositif laisse le différentiel fonctionner comme un différentiel classique lorsque les couples résistants sont égaux. L'invention utilise pour freiner les planétaires, des freins à disques bien connus, les freins à cône pouvant également convenir.

Dans cette invention, la liaison en rotation entre planétaire et plateau arbré (arbre de sortie) est assurée par un certain nombre de billes (au nombre d'au moins trois) logées chacune dans deux cavités à flancs symétriques inclinés, et arrondis au rayon de la bille. L'une est ménagée dans le planétaire et l'autre dans le plateau arbré. Elle peut aussi être assurée par des dents à flancs inclinés, taillées latéralement dans le planétaire et dans le plateau arbré. Ces cavités avec leur bille ou ces dents, agissent de la même façon dans les deux sens de rotation du différentiel. (Les organes internes du différentiel sont disposés symétriquement de part et d'autre de l'axe des satellites).

Le but de cette liaison connue, est de provoquer une réaction axiale entre planétaire et plateau arbré, proportionelle au couple transmis entre ces deux éléments.

Deux grains de butée placés entre les deux plateaux arbrés, leur permettent de se transmettre réciproquement les poussées axiales reçues de leur planétaire respectif.

Une caractéristique importante de l'invention est que les plateaux arbrés, transmettent dans leur déplacement une pression sur les disques de frein par l'intermédiaire de poussoirs (au nombre minimun de trois) traversant les planétaires. Pour cela il est nécessaire de prévoir au montage, un jeu entre les billes et les flancs de leur cavité d'une part, et d'autre part entre planétaire et plateau arbré, lorsque ce dernier presse les disques de frein.

Une seconde caractéristique importante de cette invention est que dans ce système, utilisant des réactions axiales internes au différentiel et dirigés vers le centre de celui-ci, les planétaires prennent constamment appui sur leur butée respective et ne sont soumis, à aucun moment au cours du fonctionnement à un déplacement axial quelconque.

Une troisième caractéristique de l'invention toujours dans ce système utilisant des réactions axiales internes au différentiel est que l'axe des satellites reste constamment totalement solidaire du boîtier de différentiel et n'est soumis lui non plus à aucun déplacement par rapport à ce dernier.

Une quatrième caractéristique de l'invention est que le jeu d'engrènement, toujours dans ce système utilisant des réactions axiales internes au différentiel, entre planétaire et satellite reste constant lors du fonctionnement.

Les planétaires transmettant leur couple moteur à leur plateau arbré respectif par l'intermédiaire des billes ou des dents à flancs inclinés, suivant le mode choisi, lorsque ces couples sont égaux (cas ou les deux roues du véhicule ont bonne adhérence sur le sol) les poussées axiales des plateaux arbrés, dirigées vers l'intérieur du différentiel s'annulent et les disques de frein ne sont pas serrés. Le différentiel se comporte alors comme un différentiel classique quelque soit la valeur des couples transmis. Si une roue manque d'adhérence par rapport à l'autre, le planétaire assurant son entrainement tend à tourner plus vite que le boîtier du différentiel. De ce fait il cède à celui-ci (à travers ses disques de frein) une part du couple reçu du satellite. Tandis que l'autre planétaire, tendant à tourner moins vite que le boîtier reçoit de celui-ci (à travers ses disques de frein également) une part de couple venant s'ajouter à la part reçu du satellite. Dans ce cas on voit que les planétaires transmettent à leur plateau arbré respectif des couples moteurs inégaux. Ceci provoque sur chacun d'eux une poussée axiale différente. Ainsi le plateau arbré coté planétaire tendant à tourner plus vite que le boîtier (c'est à dire coté roue patinante) sera poussé axialement par l'autre plateau et serrera les disques de frein empêchant ainsi le planétaire de tourner plus vite que le boîtier. La puissance de ce freinage, qui s'élimine au fur et à mesure que les couples s'égalisent, est proportionnelle à la différence des couples transmis entre planétaire et plateau arbré d'un coté et de l'autre.

La puissance de freinage suffisante, pour empêcher l'emballement du planétaire sera obtenue d'une part par le choix judicieux de la pente des flancs des cavités recevant les billes, ou la pente des dents latérales (suivant le mode choisi) d'autre part par le choix de la surface de friction des disques de frein. Il est donc facile par le choix de ces deux paramètres d'obtenir le freinage convenable.

Suivant une autre forme de réalisation de l'invention, les arbres de sortie du différentiel ne sont soumis à aucun déplacement axial, aussi petit soit-il au cours du fonctionnement. Dans cette réalisation les éléments internes du différentiel perfectionné sont comme dans la réalisation précédante placés symétriquement, de part et d'autre de l'axe des satellites. Aussi la plus part du temps un seul coté sera décrit.

Un flasque à moyeu cannelé destiné à recevoir un arbre, est associé en rotation au planétaire par des billes. Seul le planétaire est pourvu de cavités pour recevoir les billes, agissant aussi dans les deux sens de rotation (ces cavités sont identiques à celles décrites dans le premier mode de réalisation). Les billes placées au fond de leur cavité dans le planétaire dépasse la face de celui-ci d'un peu plus de la moitié. Alors que le flasque est muni de trous cylindriques en regard des cavités, trous alésés au diamètre des billes. Le moyeu cannelé est associé au planétaire de telle sorte qu'il ne peut s'en écarter. Les billes traversant le flasque le dépassent légèrement. Par cette disposition le flasque à moyeu cannelé est entrainé par le planétaire, par l'intermédiaire des billes, sans subir aucun déplacement axial.

Une caractéristique de l'invention est que dans ce système utilisant des réactions axiales internes au différentiel, les pièces transmettant le couple, autre que les billes, ne sont soumis à aucun mouvement d'écartement.

C'est une rondelle de réaction centrée sur le moyeu du flasque qui reçoit, transmise par les billes, la réaction axiale dûe au couple transmis entre planétaire et flasque à moyeu (le couple tend à faire sortir les billes de leur cavité). Des grains de butée fixés au centre de chacune des rondelles de réaction et se faisant vis-à-vis leur permettent comme dans la première forme de réalisation, de se transmettre réciproquement les poussées axiales. Ce sont aussi ces rondelles de réaction qui transmettent le moment venu, la pression aux disques de frein par l'intermédiaire des poussoirs qui cette fois, traversent le flasque à moyeu et le planétaire. Les trous ménagés dans le flasque, pour le passage des poussoirs sont oblongs, de façon à permettre le décalage angulaire suffisant entre flasque à moyeu et planétaire. Cet réalisation convient à chaque fois qu'un léger déplacement axial des arbres de sortie (nécessaire dans la première forme de réalisation) est impossible.

Une caractéristique importante de l'invention dans cette réalisation est que les arbres de sortie du différentiel ne sont soumis à aucun déplacement axial au cours du fonctionnement, aussi petit soit-il.

Une autre caractéristique importante de l'invention, dans cette réalisation, est qu'aucune des pièces devant se déplacer axialement pour serrer les freins, n'est en prise avec une autre pour transmettre ou recevoir des couples de force, limitant ainsi le délai de réponse du système.

L'invention sera mieux comprise au cours de la description donnée ci-après à titre d'exemple purement indicatif et non limitatif, qui permettra d'en dégager les avantages et les caractéristique secondaires.

Il sera fait référence aux dessins annexés dans lesquels:

- La figure 1, illustrée par une coupe axiale du différentiel perfectionné selon l'invention.

- La figure 2, représente par une vue de face interrompue et une vue de coté en coupe interrompue également, le profil de la cavité devant recevoir une bille.

- La figure 3, illustrée par une coupe axiale du différentiel perfectionné suivant un autre mode de réalisation.

- La figure 4, représente toujours dans ce second mode de réalisation, le flasque à moyeu cannelé.

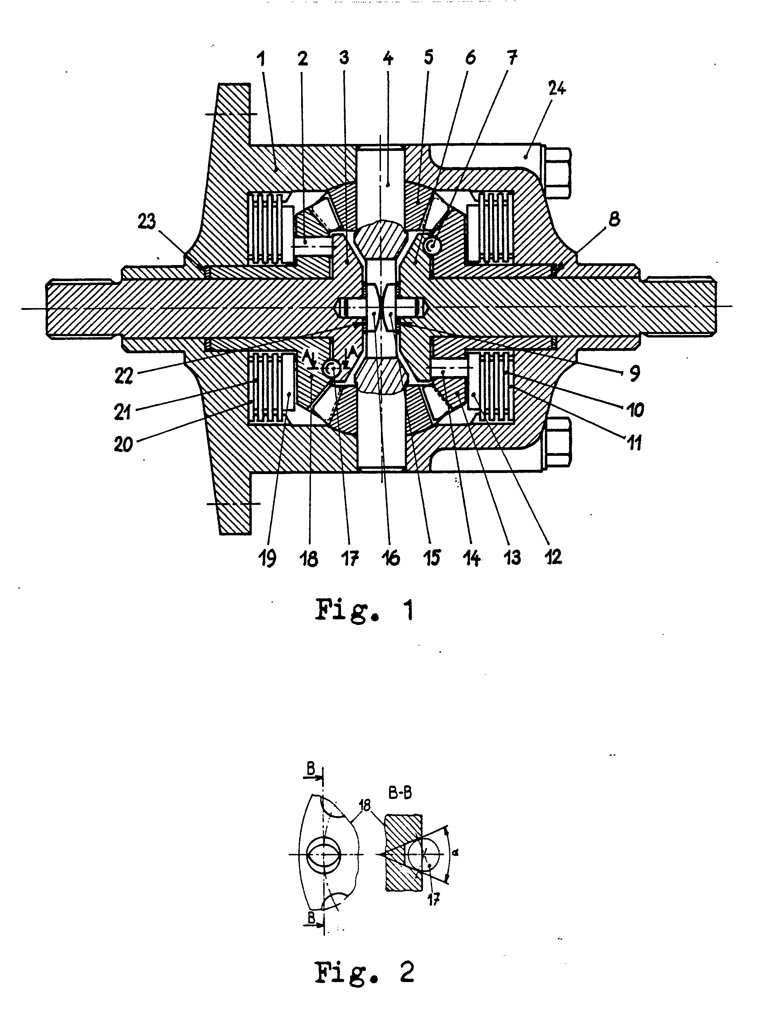

En se reportant aux figures 1 et 2, on voit que le dispositif est constitué des deux demi-boîtiers (1 et 24) des satellites (5) de leur axe (4). Deux planétaires (13 et 18) tournant librement dans des alésages usinés dans les demi-boîtiers et en appui constant sur leur butée respective (8 et 23). Les planétaires sont munis de cavités (fig. 2) à flancs symétriques inclinés, et arrondis au rayon des billes (7 et 17) et de trous alésés au diamètre des poussoirs (2 et 14) pour leur passage. Les planétaires sont aussi munis, sur leur moyeu, de cannelures recevant les disques de frein (10 et 21) lesquels sont solidaires en rotation et libres en translation. Des disques de frein (11 et 20) intercalés entre les précédents sont solidaires en rotation et libre en translation, par des cannelures, des demi-boîtiers de différentiel. Deux plateaux de pression (12 et 19) sont intercalés entre les poussoirs (2 et 14) assurant la répartition de pression sur les disques de frein.

Des plateaux arbrés (3 et 6) (arbre de sortie) sont associés en rotation aux planétaires par l'intermédiaire des billes (7 et 17). Des grains de butée (15 et 16) et leur rondelles de réglage (9 et 22) autorisent une rotation des plateaux arbrés l'un par rapport à l'autre et leur permettent aussi de se transmettre réciproquement les poussées axiales provoquées par l'association planétaire billes et plateau arbré.

Au montage de l'ensemble, les plateaux arbrés étant en appui sur les poussoirs, eux même en appui sur les disques de frein par l'intermédiaire des plateaux de pression (12 et 19), il faut prévoir un jeu suffisant entre les dits plateaux arbrés et les billes, celles-ci étant placées au fond de leur cavité dans les planétaires et ces derniers étant en appui sur leur butée respectives (8 et 23). Un espace suffisant doit aussi être ménagé entre planétaire et plateau arbré. Enfin dans cette position le choix de l'épaisseur des rondelles de réglage (9 et 22) supprimera tout jeu entre les grains de butée (15 et 16).

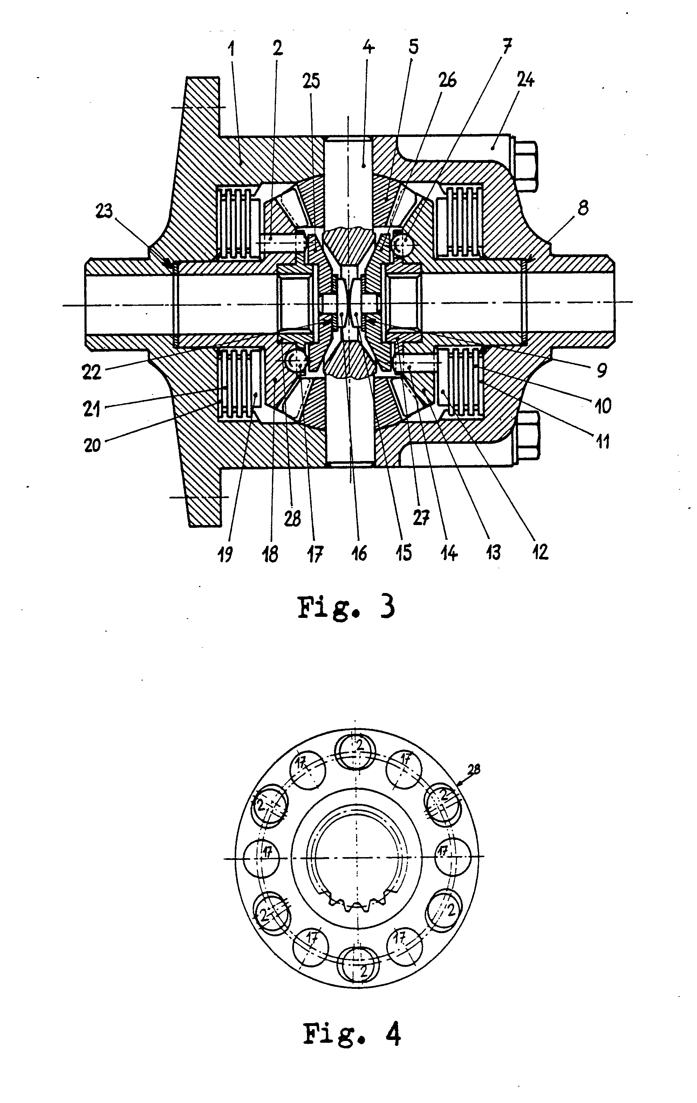

En se reportant à la figure 3, autre mode de réalisation, un flasque à moyeu cannelé (27 ou 28) est associé en rotation au planétaire (13 ou 18) par des billes. Ces billes sont logées dans des cavités de même forme que dans la réalisation précédente mais usinées uniquement dans les planétaires. Les billes placées au fond de leur cavité dépassent la face du planétaire d'un peu plus que la moitié. Les billes traversent le flasque à moyeu cannelé (27 ou 28) par les trous cylindriques et dépassent légèrement celui-ci de telle sorte que lors du fonctionnement du système, les billes sortant de la cavité du planétaire (13 ou 18) glissent dans les alésages du flasque (27 ou 28) pour finalement exercer la poussée axiale sur la rondelle de réaction (25 ou 26). Pendant tout ce temps le flasque (27 et 28) doit rester plaqué contre son planétaire.

Un grain de butée (15 ou 16) solidaire des rondelles de réaction (25 ou 26) autorise une rotation des rondelles de réaction l'une par rapport à l'autre. C'est par ces grains de butée que seront transmises réciproquement les poussées axiales provoquées par l'association planétaire billes et flasque à moyeu cannelé.

Les poussoirs (2 ou 14) traversent cette fois les planétaires dans lesquels ils sont guidés et aussi les flasques à moyeu cannelé. Les trous dans les flasques pour le passage des poussoirs sont oblongs (fig. 4) permettant le décalage angulaire nécessaire entre plateau à moyeu (27 ou 28) et le planétaire (13 ou 18).

Au montage de l'ensemble, les rondelles de réaction étant en appui sur les poussoirs, eux même en appui sur les disques de frein par l'intermédiaire du plateau de pression, il faut prévoir un jeu suffisant entre les dites rondelles de réaction et les billes. Celles-ci étant placées au fond de leur cavité dans les planétaires et ces derniers étant en appui sur leur butée respectives (8 ou 23). Un espace suffisant doit aussi subsister entre flasque à moyeu cannelé et rondelles de réaction. Le choix de l'épaisseur des rondelles de réglage (9 ou 22) éliminera tout jeu entre les grains de butée (15 et 16).

**Revendications**

1) Dispositif de perfectionnement pour différentiel autobloquant constitué de freins, pouvant assujettir l'un ou l'autre des planétaires au boîtier de différentiel, formé par l'ensemble des disques 10 et 11 et le plateau de pression 12 pour freiner le planétaire 13 et des disques 20 et 21 et du plateau de pression 19 pour freiner le planétaire 18, le freinage est commandé par la poussée axiale de l'un ou l'autre des plateaux arbrés 6 ou 3 dans la première forme de réalisation et par la poussée axiale de l'une ou l'autre des rondelles de réaction 25 ou 26 dans la seconde forme de réalisation, ces forces axiales étant dûes au couple transmis entre planétaires et plateaux arbrés ou entre planétaires et moyeux cannelés 27 ou 28, caractérisé en ce que les plateaux arbrés 3 ou 6 ou les rondelles de réaction 25 ou 26 transmettent la pression aux freins par l'intermédiaire des poussoirs 2 ou 4 traversant les planétaires sans action sur ceux-ci.

2) Dispositif selon la revendication 1 caractérisé en ce que les planétaires ne sont soumis à aucun déplacement axial au cours du fonctionnement.

3) Dispositif selon les revendications 1 ou 2 caractérisé en ce que l'axe des satellites reste constamment, totalement solidaire du boîtier de différentiel et n'est soumis à aucun déplacement par rapport à celui-ci.

4) Dispositif selon les revendications 2 ou 3 caractérisé en ce que le jeu d'engrènement entre planétaires et satellites ne se modifie pas pendant les différentes phases de fonctionnement.

5) Dispositif selon les revendications 1 ou 2 caractérisé en ce que les pièces transmettant des couples de force ne sont soumises à aucun mouvement d'écartement entre elles.

6) Dispositif selon les revendications 1, 2 et 5 caractérisé en ce que les arbres de sortie ne sont soumis à aucun déplacement axial.

7) Dispositif selon les revendications 1 ou 6 caractérisé en ce qu'aucune pièce devant se déplacer pour serrer les freins, ne reçoit ou ne transmet de couple de force, pouvant gèner leur action.

Fig. 1

Fig. 2

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 596 579 (DAIMLER BENZ) <br> * page 4, ligne 31 - page 5, ligne 9; figures * <br> --- | 1-7 | F 16 H 1/44 |
| A,D | FR-A-2 547 883 (BOSSUET) <br> * page 4, ligne 29 - page 5, ligne 22; figure * <br> --- | 1 | |
| A,D | US-A-3 364 791 (TRUCKLE) <br> * colonne 2, ligne 16 - colonne 3, ligne 33, figure 1 * <br> --- | 1 | |
| A | US-A-3 474 689 (YOUNG) <br> * colonne 5, ligne 52 - colonne 6, ligne 8, figures * <br> ----- | 1 | |

DOMAINES TECHNIQUES
RECHERCHES (Int. Cl.5)

F 16 H
B 60 K

Le présent rapport a été établi pour toutes les revendications

| Lieu de la recherche | Date d'achèvement de la recherche | Examinateur |
|---|---|---|
| LA HAYE | 16-01-1990 | MENDE H. |

EPO FORM 1503 03.82 (P0402)